# EUROPEAN PATENT SPECIFICATION

(11) **EP 2 746 080 B1**
(45) Date of publication and mention of the grant of the patent: **21.03.2018**
(21) Application number: 12197781.3
(22) Date of filing: 18.12.2012
(51) Int. Cl.: B60J 7/11, B62D 25/06, B60H 1/26

(54) **A ROOF PANEL**
DACHPLATTE
PANNEAU DE TOIT

(43) Date of publication of application: 25.06.2014
(73) Proprietor: Spheros-Parabus Ltd, 20360 Turku (FI)
(72) Inventor: Schoultz, Jan-Erik, FI-20900 Turku (FI); Butz, Timo, FI-20100 Turku (FI)
(74) Representative: Berggren Oy, Turku

(56) References cited:
- EP-A1- 0 709 244
- EP-A1- 2 189 313

## Description

### TECHNICAL FIELD OF THE INVENTION

The present invention relates to a vehicle according to the preamble of the appended independent claim. The invention thus relates to a vehicle comprising a vehicle body and an aperture in the vehicle body wherein a roof panel is arranged. The roof panel comprises a glass pane made of tempered glass, and being provided with an opening for the passage of air through the glass pane, and a ventilation device attached to the glass pane in connection with the opening, the ventilation device being configured to control the air flow through the opening.

### BACKGROUND OF THE INVENTION

Vehicles, especially larger vehicles such as busses, are often equipped with roof hatches. Roof hatches of various types and sizes for vehicles are known in the prior art. They are designed mainly for the purpose of ventilation, but also as emergency exits, and thus they must conform to some safety standards.

Document EP 0 709 244 A1 discloses a roof hatch that can be used both for ventilating a vehicle and as an emergency exit. Document EP 2 189 313 A1 discloses a closing device for a bay made in a vehicle roof.

There exists however still a need to provide a roof panel that functions both as ventilation device yet also as an emergency exit, i.e. that is large enough for allowing escape of passengers.

### OBJECTIVES OF THE INVENTION

It is the main objective of the present invention to reduce or even eliminate the prior art problems presented above.

It is an objective of the invention to provide a roof panel that functions both as a ventilation device and as an emergency exit. The roof panel should be easy and safe to use in emergency situations.

In order to realise the above-mentioned objectives, the vehicle according to the invention is characterised by what is presented in the characterising part of the appended independent claim. Advantageous embodiments of the invention are described in the dependent claims.

### DESCRIPTION OF THE INVENTION

A typical vehicle comprises
- a vehicle body,
- an aperture in the vehicle body wherein a roof panel is arranged, the roof panel comprising
   - a glass pane made of tempered glass, and being provided with an opening for the passage of air through the glass pane, and
   - a ventilation device attached to the glass pane in connection with the opening, the ventilation device being configured to control the air flow through the opening.

In a typical vehicle, the roof panel comprises a first fastening member attached to the ventilation device and to the vehicle body, wherein the first fastening member ensures that once the glass pane is broken in an emergency situation, the ventilation device remains fastened to the vehicle body, thereby preventing it injuring passengers inside the vehicle and people outside the vehicle by falling out, and wherein the first fastening member is in the form selected from the group consisting of strings, cords, wires, cables, belts and combinations thereof.

The roof panel according to the present invention thus provides for both ventilation and emergency exit when used in a vehicle. The panel according to this invention may naturally also be used on a side of a vehicle instead of the vehicle roof. The roof panel is also suitable for a wide variety of vehicles such as coaches, buses, minibuses and trucks. The roof panel is designed to be arranged in connection with an opening in the roof or side of the vehicle.

The first fastening member ensures that once the glass pane is broken in an emergency situation, the ventilation device remains fastened to the vehicle body. This prevents it injuring the passengers inside the vehicle and people outside the vehicle by falling out. The fastening member is attached to the ventilation device and is attachable to the vehicle body by any suitable means such as by gluing, welding or screws, depending on the material from which the fastening member is made.

The tempered glass (i.e. a pre-stressed, toughened safety glass) is a glass that may be broken with a punctual force, and that falls into small pieces that are not sharp. Therefore, the broken glass does typically not present a major safety hazard for the passengers.

The opening for the passage of air, also called ventilation opening, is designed such as to allow sufficient ventilation for the vehicle, i.e. it is designed according to the size and use of the vehicle. It allows the passage of air from a first side to a second side of the glass pane, typically both from the outside to the inside of the vehicle and from the inside to the outside of the vehicle.

The roof panel may also comprise more than one ventilation device, typically when a large glass pane is used for viewing purposes, for example. In such cases, all of the ventilation devices are attached to fastening members that are also attachable to the vehicle body.

According to an embodiment, the roof panel also comprises a protective lid on a first side of the ventilation device, the first side being here the side intended to be the outside of the vehicle once the roof panel is installed. Indeed, in most environments, it is preferable to be able to prevent at least mostly the entering of water or snow inside the vehicle, through the ventilation device. The protective lid is naturally such that it does not hinder the ventilation itself.

When such protective lid is used, it is preferably also attachable to the vehicle body via a fastening member. This attachment may be provided via the first fastening member, which is then also attached to the protective lid. The roof panel may also comprise a second fastening member attached to the protective lid and adapted to be attached to the vehicle, i.e. a fastening member different from the first fastening member. This arrangement prevents the protective lid from falling out on the person breaking the glass pane in an emergency situation, or on any person outside the vehicle.

According to an embodiment, the roof panel further comprises a frame for attaching the roof panel to the vehicle. The frame of the roof panel can be attached, for example, by gluing or by using fastening members such as screws. In such embodiment, either or both of said first or second fastening members may be also attached to the frame, or the roof panel may yet further comprise a third fastening member attached to the frame and adapted to be attached to the vehicle. Indeed, it is preferable that all parts of the roof panel that become loose or may become loose once the glass pane is broken, are attachable to the vehicle body in a manner that prevents them from falling out of place and detaching completely from the vehicle body.

According to another embodiment, the roof panel also comprises an interior cover for covering the glass pane and said interior cover comprises an opening adapted for breaking the glass pane. The interior cover thus has an opening, for example in the shape of a rectangle or a sphere, that is large enough for allowing the passengers to break the glass pane with a tool, typically provided next to the roof panel. The interior cover thus protects the passangers from the broken glass. The interior cover is then typically pushed out from the vehicle roof, to allow exit of the passengers. The structure may also be construed such that the interior cover can be removed also towards the inside of the vehicle.

Also this interior cover is preferably attachable to the vehicle body, and the attachment can be made via one or more of said first, second or third fastening members or via a fourth fastening member attached to the interior cover and adapted to be attached to the vehicle. When such interior cover is used, the ventilation device may also be attached to the interior cover in such a way that it does not detach itself from it, and thus no separate fastening members for both the interior cover and the ventilation device are required, i.e. the interior cover may function as the first fastening member.

An additional benefit of an interior cover as explained above is that it also protects the inside of the vehicle from condensed water and any rainwater or snow that may enter through the ventilation device.

According to the invention, the fastening member is in the form selected from the group consisting of strings, cords, wires, cables, belts and combinations thereof. When several fastening members are used, they may be made in the same or different forms and materials. The material of the fastening member or members may be for example metal, carbon fibers or plastic. It is preferable to use materials that are not flammable and that can stand punctual or cutting forces.

The roof panel may also comprise a second lid arranged to completely cover the roof panel from the inside of the vehicle, for example during long term parking of the vehicle. Such arrangement prevents water and snow from entering the vehicle while it is unused. The second lid is especially suitable for roof panels that do not comprise any interior cover.

The roof panel may be manufactured either by first providing a glass pane and adding a ventilation device in an aperture made into the glass pane, or by arranging a glass pane around the ventilation device, while the ventilation device may be already attached to an interior cover. In the latter case, the ventilation device may be for example along one side of the glass pane, instead of being in the middle of the glass pane. Indeed, the ventilation device may be provided at any suitable location on the glass pane, such as in the middle, on one side or in the corner of the glass pane. Each location has its own benefits, such as the efficiency of ventilation, the usability of the glass pane for viewing purposes and the length of the fastening member.

As explained above, the roof panel may also be located on a side of the vehicle instead of its roof. The vehicle may also comprise more than one roof panel, such as two, three or four roof panels located to provide optimum ventilation as well as emergency exits.

### DESCRIPTION OF THE DRAWINGS

The same reference signs are used of the same or like components in different embodiments.
- Fig. 1: illustrates a roof panel according to an embodiment of the invention, as a cross-sectional view.
- Fig. 2: illustrates the roof panel of Figure 1, in an open position viewed from the outside of a vehicle.
- Fig. 3: illustrates the roof panel of Figure 1, in a closed position viewed from the outside.

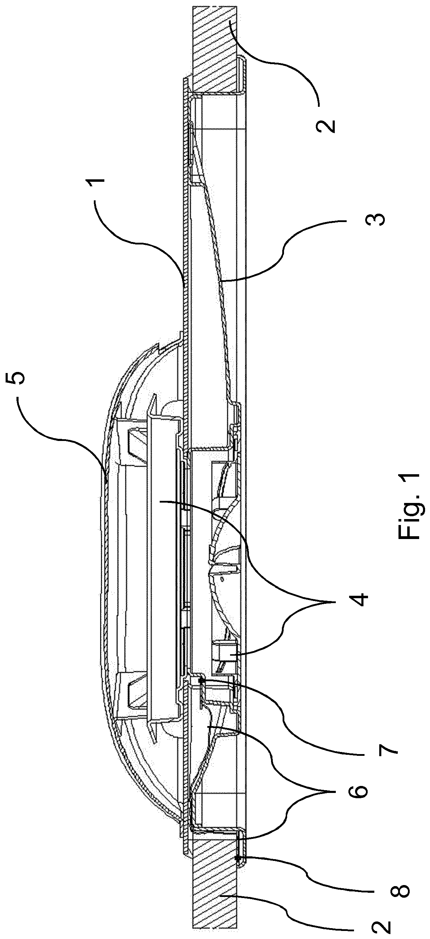

Fig. 1 illustrates a roof panel according to an embodiment of the invention, as a cross-sectional view. A glass pane 1 is arranged to a vehicle body 2 and a ventilation device 4 is arranged in the glass pane 1. The ventilation device is also arranged on an interior cover 3, that covers essentially all of the glass pane 1. The ventilation device 4 is covered on the outside by a protective lid 5. A fastening member 6 is attached at its first end 7 to the ventilation device 4 and at its second end 8 to the vehicle body 2.

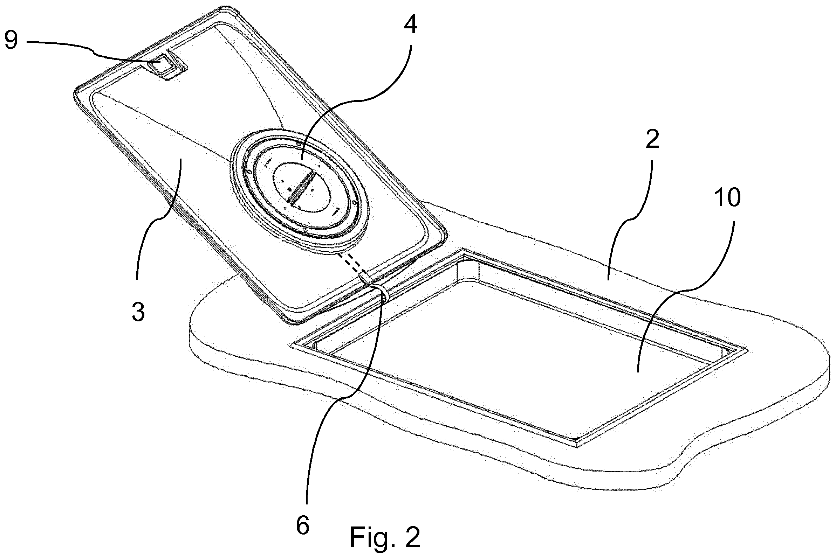

Fig. 2 illustrates the roof panel of Figure 1, in an open position viewed from the outside of a vehicle. In this Figure, the glass pane has been broken by a punctual force at the opening 9, and the interior cover 3 and the ventilation device 4 (as well as the pieces of broken glass) have been pushed outside the vehicle. The interior cover 3 with the ventilation device 4 attached to it are attached to the vehicle body 2 via the fastening member 6. The emergency exit 10 is thus open.

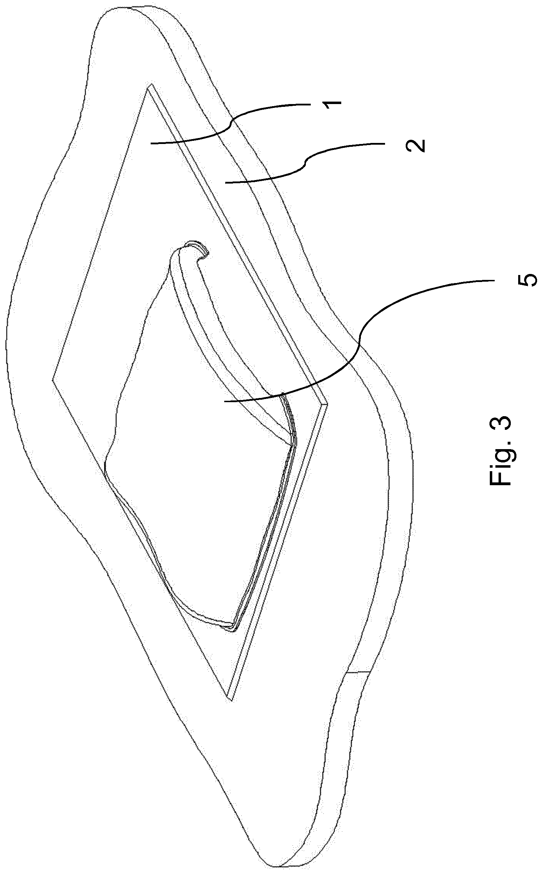

Fig. 3 illustrates the roof panel of Figure 1, in a closed position viewed from the outside, showing the vehicle body 2, the glass pane 1 and the protective lid 5 of the ventilation device.

Only advantageous exemplary embodiments of the invention are described in the Figures. It is clear to a person skilled in the art that the invention is not restricted only to the examples presented above, but the invention may vary within the limits of the claims presented hereafter. Some possible embodiments of the invention are described in the dependent claims, and they are not to be considered to restrict the scope of protection of the invention as such.

## Claims

1. A vehicle, comprising:
- a vehicle body,
- an aperture in the vehicle body wherein a roof panel is arranged, the roof panel comprising:
- a glass pane (1) made of tempered glass, and being provided with an opening for the passage of air through the glass pane (1), and
- a ventilation device (4) attached to the glass pane (1) in connection with the opening, the ventilation device (4) being configured to control the air flow through the opening,
**characterised in that** the roof panel comprises a first fastening member (6) attached to the ventilation device (4) and to the vehicle body (2), wherein the first fastening member (6) ensures that once the glass pane (1) is broken in an emergency situation, the ventilation device (4) remains fastened to the vehicle body, thereby preventing it injuring passengers inside the vehicle and people outside the vehicle by falling out, and wherein the first fastening member (6) is in the form selected from the group consisting of strings, cords, wires, cables, belts and combinations thereof.

2. The vehicle according to claim 1, **characterised in that** the roof panel comprises a protective lid (5) on a first side of the ventilation device (4).

3. The vehicle according to claim 2, **characterised in that** said first fastening member is also attached to the protective lid (5).

4. The vehicle according to claim 2, **characterised in that** the roof panel comprises a second fastening member attached to the protective lid (5) and adapted to be attached to the vehicle.

5. The vehicle according to any of the previous claims, **characterised in that** the roof panel comprises a frame for attaching the roof panel to the vehicle.

6. The vehicle according to claim 5, **characterised in that** either of said first or second fastening members is also attached to the frame.

7. The vehicle according to claim 5, **characterised in that** the roof panel comprises a third fastening member attached to the frame and adapted to be attached to the vehicle.

8. The vehicle according to any of the previous claims, **characterised in that** the roof panel comprises an interior cover (3) for covering the glass pane (1) and **in that** said interior cover (3) comprises an opening (9) adapted for breaking the glass pane (1).

9. The vehicle according to claim 8, **characterised in that** one of said first, second or third fastening members is also attached to the interior cover (3).

10. The vehicle according to claim 8, **characterised in that** the roof panel comprises a fourth fastening member attached to the interior cover (3) and adapted to be attached to the vehicle.

11. The vehicle according to any of the previous claims, **characterised in that** the fastening member is in the form selected from the group consisting of strings, cords, wires, cables, belts and combinations thereof.

## Patentansprüche

1. Fahrzeug umfassend:
- einen Fahrzeugkörper,
- eine Öffnung in dem Fahrzeugkörper, worin eine Dachhaut angeordnet ist, wobei die Dachhaut umfasst:
- eine Glasscheibe (1), welche aus einem Hartglas hergestellt ist und welche mit einer Öffnung für den Durchzug von Luft durch die Glasscheibe (1) versehen ist, und
- eine Belüftungsvorrichtung (4), welche an der Glasscheibe (1) in Verbindung mit der Öffnung angebracht ist, wobei die Belüftungsvorrichtung (4) ausgestaltet ist, um den Luftfluss durch die Öffnung zu steuern,
**dadurch gekennzeichnet, dass** die Dachhaut ein erstes Befestigungsteil (6) umfasst, welches an der Belüftungsvorrichtung (4) und an dem Fahrzeugkörper (2) angebracht ist, wobei das erste Befestigungsteil (6) sicherstellt, dass, wenn die Glasscheibe (1) in einem Notfall gebrochen ist, die Belüftungsvorrichtung (4) an dem Fahrzeugkörper befestigt bleibt, wodurch verhindert wird, dass Insassen innerhalb des Fahrzeugs und Leute außerhalb des Fahrzeugs durch ein Herausfallen verletzt werden, und wobei das erste Befestigungsteil (6) in der Form ist, welche ausgewählt ist aus der Gruppe, welche besteht aus Schnüren, Seilen, Drähten, Kabeln, Gurten und Kombinationen davon.

2. Fahrzeug nach Anspruch 1, **dadurch gekennzeichnet, dass** die Dachhaut einen Schutzdeckel (5) auf einer ersten Seite der Belüftungsvorrichtung (4) umfasst.

3. Fahrzeug nach Anspruch 2, **dadurch gekennzeichnet, dass** das erste Befestigungsteil auch an dem Schutzdeckel (5) angebracht ist.

4. Fahrzeug nach Anspruch 2, **dadurch gekennzeichnet, dass** die Dachhaut ein zweites Befestigungsteil umfasst, welches an dem Schutzdeckel (5) angebracht ist und ausgestaltet ist, um an dem Fahrzeug angebracht zu sein.

5. Fahrzeug nach einem der vorhergehenden Ansprüche, **dadurch gekennzeichnet, dass** die Dachhaut einen Rahmen umfasst, um die Dachhaut an dem Fahrzeug anzubringen.

6. Fahrzeug nach Anspruch 5, **dadurch gekennzeichnet, dass** entweder das erste oder das zweite Befestigungsteil auch an dem Rahmen angebracht ist.

7. Fahrzeug nach Anspruch 5, **dadurch gekennzeichnet, dass** die Dachhaut ein drittes Befestigungsteil umfasst, welches an dem Rahmen angebracht ist und ausgestaltet ist, um an dem Fahrzeug angebracht zu sein.

8. Fahrzeug nach einem der vorhergehenden Ansprüche, **dadurch gekennzeichnet, dass** die Dachhaut eine innere Abdeckung (3) umfasst, um die Glasscheibe (1) abzudecken, und dass die innere Abdeckung (3) eine Öffnung (9) umfasst, welche ausgestaltet ist, um die Glasscheibe (1) zu brechen.

9. Fahrzeug nach Anspruch 8, **dadurch gekennzeichnet, dass** das erste, das zweite oder das dritte Befestigungsteil auch an der inneren Abdeckung (3) angebracht ist.

10. Fahrzeug nach Anspruch 8, **dadurch gekennzeichnet, dass** die Dachhaut ein viertes Befestigungsteil umfasst, welches an der inneren Abdeckung (3) angebracht ist und ausgestaltet ist, um an dem Fahrzeug angebracht zu sein.

11. Fahrzeug nach einem der vorhergehenden Ansprüche, **dadurch gekennzeichnet, dass** das Befestigungsteil in der Form ist, welche ausgewählt ist aus der Gruppe, welche besteht aus Schnüren, Seilen, Drähten, Kabeln, Gurten und Kombinationen davon.

## Revendications

1. Véhicule, comprenant :
- une carrosserie de véhicule,
- une ouverture dans la carrosserie de véhicule où est agencé un panneau de toit, le panneau de toit comprenant :
- un carreau de verre (1) fait de verre trempé, et qui est doté d'un orifice pour le passage de l'air par le carreau de verre (1), et
- un dispositif de ventilation (4) attaché au carreau de verre (1) en relation avec l'orifice, le dispositif de ventilation (4) étant configuré pour réguler l'écoulement d'air par l'orifice,
**caractérisé en ce que** le panneau de toit comprend un premier organe de fixation (6) attaché au dispositif de ventilation (4) et à la carrosserie de véhicule (2), dans lequel le premier organe de fixation (6) assure que, lorsque le carreau de verre (1) est cassé dans une situation d'urgence, le dispositif de ventilation (4) reste fixé à la carrosserie de véhicule, empêchant ainsi qu'il ne blesse des passagers à l'intérieur du véhicule ou des personnes à l'extérieur du véhicule en tombant, et dans lequel le premier organe de fixation (6) se présente sous la forme choisie dans le groupe constitué de cordes, de cordons, de fils, de câbles, de courroies et de combinaisons de ceux-ci.

2. Véhicule selon la revendication 1, **caractérisé en ce que** le panneau de toit comprend un couvercle protecteur (5) sur un premier côté du dispositif de ventilation (4).

3. Véhicule selon la revendication 2, **caractérisé en ce que** ledit premier organe de fixation est également attaché au couvercle de protection (5).

4. Véhicule selon la revendication 2, **caractérisé en ce que** le panneau de toit comprend un deuxième organe de fixation attaché au couvercle de protection (5) et adapté pour être attaché au véhicule.

5. Véhicule selon l'une quelconque des revendications précédentes, **caractérisé en ce que** le panneau de toit comprend un cadre pour attacher le panneau de toit au véhicule.

6. Véhicule selon la revendication 5, **caractérisé en ce que** l'un ou l'autre desdits premier et deuxième organes de fixation est également attaché au cadre.

7. Véhicule selon la revendication 5, **caractérisé en ce que** le panneau de toit comprend un troisième organe de fixation attaché au cadre et adapté pour être attaché au véhicule.

8. Véhicule selon l'une quelconque des revendications précédentes, **caractérisé en ce que** le panneau de toit comprend un revêtement intérieur (3) pour couvrir le carreau de verre (1) et **en ce que** ledit revêtement intérieur (3) comprend un orifice (9) adapté pour casser le carreau de verre (1).

9. Véhicule selon la revendication 8, **caractérisé en ce que** l'un desdits premier, deuxième et troisième organes de fixation est également attaché au revêtement intérieur (3).

10. Véhicule selon la revendication 8, **caractérisé en ce que** le panneau de toit comprend un quatrième organe de fixation attaché au revêtement intérieur (3) et adapté pour être attaché au véhicule.

11. Véhicule selon l'une quelconque des revendications précédentes, **caractérisé en ce que** l'organe de fixation se présente sous la forme choisie dans le groupe constitué de cordes, de cordons, de fils, de câbles, de courroies et de combinaisons de ceux-ci.
